(19) Europäisches Patentamt
European Patent Office
Office européen des brevets

(11) **EP 4 509 934 A1**

(12) **EUROPÄISCHE PATENTANMELDUNG**

(43) Veröffentlichungstag:
**19.02.2025 Patentblatt 2025/08**

(21) Anmeldenummer: **23191929.1**

(22) Anmeldetag: **17.08.2023**

(51) Internationale Patentklassifikation (IPC):
***G05B 17/02*** *(2006.01)*

(52) Gemeinsame Patentklassifikation (CPC):
**G05B 17/02; C21C 5/30; C21C 5/4673;**
C21C 2005/5288; C21C 2300/06

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Primetals Technologies Austria GmbH**
**4031 Linz (AT)**

(72) Erfinder:
• **Aflenzer, Helmuth**
**4053 Haid (AT)**
• **Rohrhofer, Andreas**
**4070 Fraham (AT)**

(74) Vertreter: **Metals@Linz**
**Primetals Technologies Austria GmbH**
**Intellectual Property Upstream IP UP**
**Turmstraße 44**
**4031 Linz (AT)**

(54) **VERFAHREN UND VORRICHTUNG ZUR DATENVERARBEITUNG ZUR AUTOMATISCHEN ANPASSUNG VON PARAMETERN EINES MATHEMATISCHEN MODELLS**

(57) Die vorliegende Erfindung beschreibt ein Verfahren und eine Vorrichtung zur Datenverarbeitung zur automatischen Anpassung von Parametern eines mathematischen Modells. Die technische Aufgabe besteht darin, ein Computerimplementiertes Verfahren zur automatischen Anpassung von Parametern eines mathematischen Modells zur Überwachung und/oder Steuerung/-Regelung eines Herstellungsprozesses zur Stahlerzeugung, zu verbessern, indem Parameter optimiert werden.

Dem mathematischen Modell werden Eingangsgrößen zugeführt, welche zumindest einen Messwert umfassen und das mathematische Modell gibt Ausgangsgrößen aus, die zur Überwachung und/oder Steuerung/-Regelung der Herstellungsprozesse dienen.

Die technische Aufgabe wird dadurch gelöst, dass die Eingangsgrößen und die Parameter zumindest teilweise aufgezeichnet werden, wobei Rechengrößen zumindest eine Prozessgröße umfassen, für die auch Messgrößen zur Verfügung stehen.

Dabei wird eine Kostenfunktion von Differenzen ermittelt, die die Abweichung zwischen diesen Messgrößen und den entsprechenden Rechengrößen bewertet, wobei aus der Kostenfunktion von Differenzen und den Parametern ein Sensitivitätsvektor ermittelt wird. Mit Hilfe eines Optimierungsverfahrens werden Parameter schrittweise derart ermittelt, dass die Kostenfunktion von Differenzen minimiert wird.

EP 4 509 934 A1

Fig. 1

Processed by Luminess, 75001 PARIS (FR)

**Beschreibung**

Gebiet der Technik

Die beschriebene Erfindung befindet sich auf dem Gebiet der computerimplementierten mathematischen Modelle zur Überwachung und/oder Steuerung/Regelung von Herstellungsprozessen zur Stahlerzeugung.

Dem computerimplementierten mathematischen Modell werden Eingangsgrößen zugeführt, welche auch Messgrößen umfassen. Nach Durchführung von Rechenschritten werden Ausgangsgrößen ausgegeben, mit denen die Herstellungsprozesse überwacht bzw. gesteuert und/oder geregelt werden.

Des Weiteren umfasst die Erfindung ein System zur Datenverarbeitung, ein Computerprogrammprodukt und ein Computerlesbares Speichermedium.

Stand der Technik

Bei metallurgischen Herstellungsprozessen in der Stahlindustrie kommen häufig Elektrolichtbogenöfen (EAF), Sauerstoffaufblaskonverter (BOF) oder die Argon-Sauerstoff-Entkohlung (AOD) zum Einsatz.

Um beispielsweise die Zufuhr der elektrischen Leistung zu einem EAF während des Betriebes zu optimieren, bzw. um verschiedene Prozessvariablen zu überwachen und/oder zu steuern/regeln, kommt ein sogenanntes Prozessoptimierungssystem zum Einsatz. Das Prozessoptimierungssystem kann hierbei die Überwachung/Steuerung/Regelung der Temperatur, der chemischen Zusammensetzung der Schmelze, des Stromverbrauchs sowie des Einbringens von Stoffen umfassen. Hierbei kommen sowohl Sensoren als auch mathematische Modelle zur Anwendung, um den Prozesszustand zu erfassen. Mathematische Modelle kommen insbesondere dann zum Einsatz, wenn Messtechnik nicht in der Lage ist, Prozessparameter in der erforderlichen Qualität zu erfassen.

Auf Basis der gesammelten Prozessdaten erfolgt eine Steuerung/Regelung des metallurgischen Herstellungsprozesses in Echtzeit. Damit können unter anderem die Effizienz der Herstellung und die Qualität des Endprodukts verbessert werden, Energieverbräuche und Emissionen verringert werden und die Produktionsausbeute gesteigert werden.

Die im Prozessoptimierungssystem eingesetzten mathematischen Modelle verwenden

Parameter. Mit diesen Parametern kann ein Modell so eingestellt werden, dass die Vorhersage-Genauigkeit möglichst hoch ist und das Modell die Realität möglichst gut abbildet. Daher ist es von besonderer Bedeutung, dass diese Parameter entsprechend eingestellt bzw. optimiert werden.

Ausgehend von Standardwerten kann beispielsweise durch Techniken wie Trial-and-Error eine Anpassung der verwendeten Parameter erfolgen.

Typischerweise erfolgt diese Anpassung bei der Anlageninbetriebnahme während einer sogenannten "Tuning Phase".

Das Ziel der Tuning Phase besteht darin, den besten Parametersatz zu finden, um die Abweichung zwischen den Modellvorhersagen und dem tatsächlichen Anlagenzustand zu minimieren und damit die Vorhersagegenauigkeit des mathematischen Modells zu verbessern.

Die Tuning-Phase ist jedoch zeitaufwändig, mit hohen Kosten verbunden und kann nur an der Anlage selbst durchgeführt werden.

Zusammenfassung der Erfindung

Bei metallurgischen Herstellungsprozessen kommen Prozessoptimierungssysteme zum Einsatz, welche mathematische Modelle beinhalten, die reale physikalische und chemische Prozesse nachbilden. Diese Modelle beinhalten bestimmte Parameter, durch deren Einstellung bzw. Optimierung die Nachbildung der Realität möglichst genau erfolgen soll. Diese Parameter sind teilweise anlagenabhängig und müssen somit für jede Anlage neu ermittelt werden.

Die Aufgabe der Erfindung ist es, ein computerimplementiertes Verfahren zur Verfügung zu stellen, welches das mathematische Modell automatisch an die vorliegenden Gegebenheiten und Prozesse anpasst.

Dem computerimplementierten Verfahren werden zumindest eine, bevorzugt zumindest fünf Eingangsgrößen zugeführt, wobei zumindest eine, bevorzugt zumindest drei Eingangsgrößen eine Messgröße einer Prozessgröße ist/sind , sodann werden Berechnungen unter Verwendung von Rechengrößen durchgeführt, schließlich gibt das mathematische Modell Ausgangsgrößen aus. Die Parameter nehmen dabei Einfluss auf die Berechnungen und damit auf die Rechengrößen und Ausgangsgrößen. Beispiele für Parameter sind materialbezogene Korrekturwerte für spezifische Enthalpien von Einsatzstoffen. Es handelt sich in diesem Fall also um Differenzen von Werten spezifischer Enthalpien, die tatsächlich für die Berechnungen verwendet werden zu deren theoretischen Werten. Nach einer Optimierung der Parameter führen Rechenergebnisse des mathematischen Modells zu möglichst geringen Abweichungen zwischen vorhandenen Messwerten von Prozessgrößen und den entsprechenden Rechengrößen. Eine solche Prozessgröße ist beispielsweise eine Temperatur einer Schmelze. Mit entsprechend ist gemeint, dass für eine bestimmte Prozessgröße Messwerte und Rechenwerte vorhanden sind, die einem Vergleich bzw. einer Differenzbildung zugeführt werden können.

Die Aufgabe wird dadurch gelöst, dass die Eingangsgrößen und die Parameter zumindest teilweise aufgezeichnet werden, wobei die Rechengrößen zumindest eine Prozessgröße umfassen, für die auch Messgrößen zur Verfügung stehen.

Weiters wird zumindest eine Kostenfunktion von Differenzen ermittelt, die die Abweichung zwischen diesen Messgrößen und den entsprechenden Rechengrößen bewertet.

Aus der Kostenfunktion von Differenzen und den Parametern wird ein Sensitivitätsvektor ermittelt, welcher angibt, wie die Parameter die Kostenfunktion von Differenzen beeinflussen. Anschließend werden neue Werte für die Parameter des mathematischen Modells mit Hilfe eines Optimierungsverfahrens unter Verwendung des Sensitivitätsvektors derart ermittelt, dass die Kostenfunktion von Differenzen minimiert wird.

Grundlage für eine automatische Anpassung von Parametern ist eine Aufzeichnung von Prozessdaten. Diese stehen in Form von Messgrößen als Funktion der Zeit, wie z.B. der elektrische Energieeintrag, Verbräuche von Prozessgasen, usw., zur Verfügung oder sind Werte aus einzelnen Messungen bzw. Eingabewerte, wie z.B. gemessene Temperaturen oder die Schrottkorbbeladung.

Um eine quantitative Aussage über den Einfluss bestimmter Parameter auf die Rechengrößen des mathematischen Modells zu erhalten, kann die Berechnung eines Sensitivitätsvektors durchgeführt werden.

Der Startpunkt für das Optimierungsverfahren ist eine Kostenfunktion von Differenzen, die beispielsweise aus der Differenz zwischen Messgrößen und Rechengrößen von Prozessgrößen gebildet wird.

Wird beispielsweise ein Temperaturmodell betrachtet, kann die Kostenfunktion $J$ von Differenzen berechnet werden zu

$$J = (T(\vec{p}) - T_{meas})^2 \qquad \text{(Gleichung 1)}$$

Dabei beschreibt $T(\vec{p})$ einen Rechenwert einer Temperatur als mathematische Funktion eines Parametervektors $\vec{p}$ und $T_{meas}$ einen Messwert dieser Temperatur.

Diese Temperatur für einen nächsten Zeitschritt kann als mathematische Funktion $f$ der Temperatur des aktuellen Zeitschritts und des Parametervektors $\vec{p}$ dargestellt werden mit

$$T_{k+1}(\vec{p}) = f(T_k(\vec{p}), \vec{p}) \qquad \text{(Gleichung 2)}$$

Somit kann die Sensitivität dieser berechneten Temperatur als mathematische Funktion des Parametervektors $\vec{p}$ in Bezug auf den Parameter $p_i$ für den nächsten Zeitschritt berechnet werden zu

$$\frac{\partial}{\partial p_i} T_{k+1}(\vec{p}) = \frac{\partial f}{\partial T}(T_k(\vec{p}), \vec{p}) \frac{\partial}{\partial p_i} T_k(\vec{p}) + \frac{\partial f}{\partial p_i}(T_k(\vec{p}), \vec{p}) \qquad \text{(Gleichung 3)}$$

Zum Zeitpunkt der Messung ergibt sich die Sensitivität der Kostenfunktion von Differenzen zu

$$\frac{\partial J}{\partial p_i} = 2(T(\vec{p}) - T_{meas}) \frac{\partial}{\partial p_i} T(\vec{p}) \qquad \text{(Gleichung 4)}$$

Werden weitere Parameter betrachtet, folgen weitere Sensitivitäten, die in einem Sensitivitätsvektor dargestellt werden.

Analog können in die Berechnung der Kostenfunktion von Differenzen weitere Rechengrößen bzw. ihre entsprechenden Messgrößen einfließen. Anstelle der skalaren Größen treten Vektoren von Rechengrößen und Messgrößen, vor Anwendung des Quadrats wird eine Vektornorm berechnet.

Weiters können auch mehrere Kostenfunktionen von Differenzen berechnet werden, wobei jede dieser Kostenfunktionen von Differenzen von einem eigenen Satz von Parametern abhängt. Dabei wird die beschriebene Berechnungsmethode sequenziell für alle Kostenfunktionen von Differenzen durchgeführt.

Weitere Rechengrößen und Kostenfunktionen von Differenzen können beispielsweise in Zusammenhang mit der Modellierung der Konzentration von Elementen wie Kohlenstoff oder Phosphor im Stahl definiert werden.

Beispielsweise mit Hilfe eines Gradientenverfahrens können die Parameter schrittweise so angepasst werden, dass die Kostenfunktion von Differenzen minimiert wird. Eine mögliche Anpassung der Parameter ist die Methode des steilsten Abstiegs mit

$$\Delta p_i = -\mu \frac{\partial J}{\partial p_i} \qquad \text{(Gleichung 5)}$$

wobei $\Delta p_i$ eine schrittweise Änderung der jeweiligen Parameter und $\mu$ eine Schrittweite darstellen. Ein solcher Optimierungsschritt kann in jedem Zeitschritt erfolgen, bevorzugt dann, wenn ein neuer Messwert vorhanden ist. $\mu$ wird im Folgenden auch als Lernrate bezeichnet.

Die Lernrate gibt an, wie schnell ein Parameter des Modells an die jeweilige Prozesssituation angepasst wird. Wird die Lernrate zu groß gewählt, kann die Berechnungsmethode instabil werden. $\frac{\partial J}{\partial p_i}$ wird auch als Sensitivitätsvektor bezeichnet und gibt an, wie stark die Änderung bestimmter Parameter die Änderung der Kostenfunktion von Differenzen beeinflusst. Dieser Ansatz erlaubt eine mehrdimensionale Auswertung. Haben beispielsweise mehrere Parameter Einfluss auf das Ergebnis, so wird dies berücksichtigt. Haben Parameter geringeren Einfluss auf das Ergebnis, so werden diese durch den Sensitivitätsvektor geringer gewichtet.

In einer vorteilhaften Ausführungsform werden die Parameter des mathematischen Modells zumindest teilweise aus einem Datenspeicher geladen und/oder werden nach Anwendung des Optimierungsverfahrens zumindest teilweise in einem Datenspeicher gespeichert. Auf diese Weise ist es möglich, sowohl einzelne Parameter als auch Sätze von Parametern, die in der Vergangenheit bereits Optimierungen erfahren haben, heranzuziehen und für den Herstellungsprozess zu verwenden. Ebenso können diese Parameter oder Parametersätze für die zukünftige Anwendungen des Herstellungsprozesses verwendet werden oder weiter optimiert werden.

In einer weiteren vorteilhaften Ausführungsform kann das computerimplementierte Verfahren online und/oder offline ausgeführt werden.

Wenn das computerimplementierte Verfahren online, also während des Herstellungsprozesses zur Überwachung/Steuerung/Regelung desselben eingesetzt wird, kann eine fortlaufende schrittweise Optimierung der Parameter des mathematischen Modells durchgeführt werden.

Wenn das computerimplementierte Verfahren offline und unmittelbar nach Abschluss einer Schmelze ausgeführt wird, können zunächst die zu einer Schmelze gehörigen Messdaten analysiert und hinsichtlich Plausibilität, Vollständigkeit und Fehlerhaftigkeit überprüft werden.

Wenn z.B. zwei kurz aufeinanderfolgende Messungen stark voneinander abweichen, würden die Messdaten dieser Schmelze nicht zur Berechnung der Parameter herangezogen werden, insbesondere dann, wenn diese eine starke Auswirkungen auf die Parameter hätten. Damit kann ebenfalls eine fortlaufende schrittweise Optimierung der Parameter des mathematischen Modells durchgeführt werden.

Weiters kann eine offline-Ausführung des computerimplementierten Verfahrens auch unabhängig vom Herstellungsprozess erfolgen. Die dabei ermittelten Parameter können im Datenspeicher gespeichert werden und stehen somit für eine online-Ausführung des mathematischen Modells zur Verfügung.

In einer weiteren vorteilhaften Ausführungsform wird das Verfahren zur Optimierung der Parameter des mathematischen Modells durch Minimierung der Kostenfunktion von Differenzen mittels eines Gradientenverfahrens durchgeführt.

In einer weiteren vorteilhaften Ausführungsform wird das Verfahrens zur Optimierung der Parameter des mathematischen Modells durch Minimierung der Kostenfunktion von Differenzen mittels der Methode des steilsten Abstiegs gemäß Gleichung 5 durchgeführt.

In einer weiteren vorteilhaften Ausführungsform kann über eine sogenannte Lernrate im Sinne einer Schrittweite die Änderung der Parameter je Optimierungsschritt gemäß Gleichung 5 verstärkt oder abgeschwächt werden.

In einer weiteren vorteilhaften Ausführungsform handelt es sich beim Herstellungsverfahren zur Flüssigstahlerzeugung um den Betrieb eines Elektrolichtbogenofens oder eines Konverters zur Stahlherstellung.

In einer weiteren vorteilhaften Ausführungsform handelt es sich beim mathematischen Modell um ein Modell, das als Prozessgrößen die Temperatur in einer Schmelze und/oder die Kohlenstoffkonzentration in einer Schmelze und/oder die Phosphorkonzentration in einer Schmelze modelliert.

In einer weiteren vorteilhaften Ausführungsform umfassen die Parameter des mathematischen Modells für die Berechnung der Kohlenstoffkonzentration in der Schmelze einen oder mehrere Korrekturfaktoren, die das Zuteilungsverhältnis eines in das Verfahren zur Stahlherstellung eingebrachten Sauerstoffs zu einem im Stahlbad vorhandenen Kohlenstoff für die Berechnung einer Oxidationsreaktion beschreiben.

Diese Korrekturfaktoren können global, also gleich für den gesamten Bereich von möglichen Kohlenstoffkonzentrationen im Stahl oder unterschiedlich für bestimmte Bereiche von Kohlenstoffkonzentrationen im Stahl definiert werden.

In einer weiteren vorteilhaften Ausführungsform umfassen die Parameter des mathematischen Modells für die Berechnung der Temperatur in der Schmelze materialbezogene additive Korrekturwerte für spezifische Enthalpien eingesetzter Stoffe.

In einer weiteren vorteilhaften Ausführungsform umfassen die Parameter des mathematischen Modells für die Berechnung der Temperatur in der Schmelze Korrekturfaktoren für Wärmeverluste und/oder Energieeinbringung. Die Korrekturfaktoren können global, also gleich für die gesamte Dauer des Herstellungsprozesses am Elektrolichtbogenofen oder unterschiedlich für bestimmte zeitliche Abschnitte des Herstellungsprozesses definiert werden.

In einer weiteren vorteilhaften Ausführungsform umfassen die Prozessgrößen des mathematischen Modells Wärmeverluste durch Wärmestrahlung von einer Schmelze zu einem Ofendeckel und/oder einem angestrahlten Bereich einer Ofenwand.

Eine weitere Aufgabe der Erfindung ist es, ein(e) Vorrichtung/System zur Datenverarbeitung zu schaffen, welches Mittel zur automatischen Anpassung von Parametern eines mathematischen Modells zur Überwachung und/oder Steuerung/Regelung eines Herstellungsprozesses zur Stahlerzeugung nach den Ansprüchen 1 - 12 umfasst.

Die Aufgabe der Erfindung wird auch durch ein Computerprogrammprodukt gelöst, welche Befehle umfasst, die bei der Ausführung des Programms durch einen Computer diesen veranlassen, das Verfahren/die Schritte des Verfahrens nach den Ansprüchen 1 - 12 auszuführen.

Des Weiteren wird die Aufgabe durch ein Computerlesbares Speichermedium gelöst, welches Befehle umfasst, die bei der Ausführung durch einen Computer diesen veranlassen, das Verfahren/die Schritte des Verfahrens nach den Ansprüchen 1 - 12 auszuführen.

Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigt:

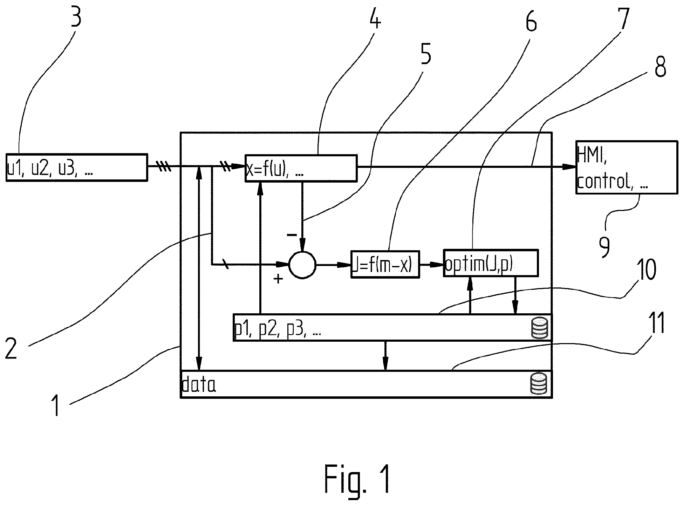

Fig 1 ein Blockdiagramm eines computerimplementierten Verfahrens zur automatischen Anpassung von Parametern eines mathematischen Modells 4 zur Überwachung und/oder Steuerung/Regelung eines Herstellungsprozesses zur Stahlerzeugung.

Beschreibung der Ausführungsformen

Fig. 1 zeigt eine Ausführungsform eines Computerimplementierten Verfahrens 1 zur automatischen Anpassung von Parametern 10 eines mathematischen Modells 4 zur Überwachung und/oder Steuerung/Regelung 9 eines Herstellungsprozesses zur Stahlerzeugung.

Dabei wird dem mathematischen Modell 4 zumindest eine Eingangsgröße 3 zugeführt, wobei zumindest eine Eingangsgröße eine Messgröße 2 einer Prozessgröße ist und es gibt Ausgangsgrößen 8 aus. Typische Eingangsgrößen 3 können beispielsweise zeitlich veränderliche Messwerte eines elektrischen Energieeintrags oder von Verbräuchen von Prozessgasen beinhalten. Weitere Eingangsgrößen können auch Messwerte aus einzelnen bestimmten Temperaturmessungen sein, oder eine Schrottkorbbeladung beschreiben. Die Eingangsgrößen 3 können auch weitere Information wie beispielsweise Sollwerte für bestimmte Prozessgrößen beinhalten. Die schematische Darstellung in Fig. 1 zeigt, dass die Eingangsgrößen in Messgrößen 2 und andere Eingangsgrößen aufgespalten werden. Die anderen Eingangsgrößen werden dem mathematischen Modell 4 zugeführt. Die Messgrößen 2 beziehen sich auf Prozessgrößen, für die auch Rechengrößen 5 des mathematischen Modells zur Verfügung stehen. Die Messgrößen 2 der Fig. 1 bilden also nur eine Teilmenge der Eingangsgrößen 3. Die Messgrößen 2 spielen in weiterer Folge eine wichtige Rolle, da sie mit Rechengrößen 5 des mathematischen Modells 4 verglichen werden.

Weiters umfasst das mathematische Modell 4 Parameter 10, die im Sinne von Einstellwerten verstanden werden. Mit ihrer Hilfe kann im mathematischen Modell 4 beispielweise eingestellt werden, wie stark die Zugabe bestimmter Stoffe eine Temperaturänderung im Flüssigmetall bewirkt.

Die Eingangsgrößen 3 und die Parameter 10 werden zumindest teilweise im Datenspeicher 11 aufgezeichnet. Somit ist es möglich, dass nach erfolgter Parameteroptimierung ermittelte Parameter dort abgespeichert werden und für zukünftige Anwendungen des Herstellungsprozesses zur Verfügung stehen.

Das mathematische Modell 4 führt Berechnungen durch, die für die Überwachung bzw. Steuerung/Regelung des Herstellungsprozesses zur Stahlerzeugung verwendet werden. Zur Beschreibung der chemischen und physikalischen Vorgänge des Herstellungsprozesses werden Prozessgrößen verwendet, die im mathematischen Modell 4 durch Rechengrößen 5 ausgedrückt werden. Ein Beispiel für eine solche Berechnung stellt Gleichung 6 dar. Für diejenigen Prozessgrößen, für die Rechengrößen 5 berechnet werden und Messgrößen 2 aus den Eingangsgrößen 3 zur Verfügung stehen, können berechnete und gemessene Werte verglichen werden. Die Rechengrößen 5 umfassen daher zumindest eine Prozessgröße, für die auch Messgrößen 2 zur Verfügung stehen. Damit wird eine Kostenfunktion von Differenzen 6 gemäß Gleichung 1 ermittelt, die die Abweichung zwischen diesen Messgrößen 2 und den entsprechenden Rechengrößen 5 bewertet. Aus der Kostenfunktion von Differenzen 6 und den aktuellen Werten der Parameter 10 wird ermittelt, wie die Parameter 10 die Kostenfunktion von Differenzen 6 beeinflussen. Gleichungen 2-4 beschreiben diese Berechnung am Beispiel eines Temperaturmodells. Diese Berechnung erfolgt im Rahmen der Parameteroptimierung 7 in jedem Optimierungsschritt, wobei neue Werte für die Parameter 10 des mathematischen Modells 4 derart ermittelt werden, dass die Kostenfunktion von Differenzen 6 minimiert wird.

Das mathematische Modell 4 umfasst Gleichungen und Formeln und beschreibt mittels Rechengrößen 5 Prozessgrößen. Eine mögliche Prozessgröße ist beispielsweise ein Wärmeverlust durch Wärmestrahlung zu einem Ofendeckel in Form einer Wärmemenge. Eine beispielhafte Darstellung des hierfür verwendeten Teils des mathematischen Modells 4 folgt zu

$$Q_{rad}^{roof} = A_{Eff,roof} \cdot A_{Stl} \cdot corr \cdot LossFactor \cdot \varepsilon \cdot \sigma \cdot conv \cdot \left(T_{Calc}^4 - T_{Eff,roof}^4\right) \cdot \Delta t$$

(Gleichung 6)

Dabei beschreibt $Q_{rad}^{roof}$ einen Wärmeverlust durch Wärmestrahlung zu einem Ofendeckel, $A_{Eff,roof}$ einen effektiven Anteil einer Fläche eines Ofendeckels, $A_{Stl}$ eine berechnete Oberfläche einer Schmelze, *corr* einen Korrekturfaktor, *LossFactor* einen Faktor für Wärmeverluste als Parameter, $\varepsilon$ einen Emissionsfaktor einer Schlacke, $\sigma$ die Stefan-Boltzmann Konstante, *conv* einen Umrechnungsfaktor von Joule auf Kilokalorien, $T_{Calc}$ einen Rechenwert einer Temperatur in einer Schmelze, $T_{Eff,roof}$ eine Temperatur eines Ofendeckels und $\Delta t$ eine Zeitschrittweite.

Im Zuge der Parameteroptimierung 7 werden der Parameter *LossFactor* und weitere Parameter 10 des mathematischen Modells 4 optimiert. Dabei wird eine Kostenfunktion von Differenzen 6 minimiert. Eingang in die Berechnung der Kostenfunktion von Differenzen 6 finden Rechengrößen 5 und Messgrößen 2 einer Prozessgröße, die mit dem Wärmeverlust durch Wärmestrahlung zum Ofendeckel $Q_{rad}^{roof}$ zusammenhängt. Auf diese Weise können Parameter 10 des mathematischen Modells 4 gefunden werden, die die Messgrößen und Rechengrößen der Prozessgrößen in Bezug auf die Kostenfunktion von Differenzen 6 möglichst gut in Übereinstimmung bringen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

1    Computerimplementiertes Verfahren
2    Messgrößen
3    Eingangsgrößen
4    Mathematisches Modell
5    Rechengrößen
6    Kostenfunktion von Differenzen
7    Parameteroptimierung
8    Ausgangsgrößen
9    Überwachung, Steuerung, Regelung
10   Parameter
11   Datenspeicher

**Patentansprüche**

1.  Computerimplementiertes Verfahren (1) zur automatischen Anpassung von Parametern (10) eines mathematischen Modells (4) zur Überwachung und/oder Steuerung/Regelung (9) eines Herstellungsprozesses zur Stahlerzeugung,

    wobei im mathematischen Modell (4) an Hand von Prozessgrößen dynamische Vorgänge des Herstellungsprozesses beschrieben werden,
    **dadurch gekennzeichnet, dass**
    dem computerimplementierten Verfahren (1) zumindest eine, bevorzugt zumindest fünf Eingangsgrößen (3) zugeführt wird/werden, wobei zumindest eine Eingangsgröße, bevorzugt zumindest drei Eingangsgrößen eine Messgröße (2) einer Prozessgröße ist/sind
    und das mathematische Modell (4) zur Berechnung von weiteren Prozessgrößen Rechengrößen (5) umfasst und das mathematische Modell (4) Ausgangsgrößen (8) ausgibt,
wobei es sich bei den Parametern um Einstellwerte handelt, die das mathematische Modell beeinflussen,
wobei die Eingangsgrößen (3) und die Parameter (10) zumindest teilweise aufgezeichnet werden,
wobei Rechengrößen (5) zumindest eine Prozessgröße umfassen, für die auch Messgrößen (2) zur Verfügung stehen,
wobei zumindest eine Kostenfunktion von Differenzen (6) ermittelt wird, die eine Abweichung zwischen diesen Messgrößen (2) und den entsprechenden Rechengrößen (5) bewertet,
wobei aus der Kostenfunktion von Differenzen (6) und den Parametern (10) zumindest ein Sensitivitätsvektor ermittelt wird, welcher angibt, wie die Parameter (10) die Kostenfunktion von Differenzen (6) beeinflussen und neue Werte für die Parameter (10) des mathematischen Modells (4) mit Hilfe eines Optimierungsverfahrens (7) unter Verwendung des Sensitivitätsvektors derart ermittelt werden, dass die Kostenfunktion von Differenzen (6) minimiert wird.

2. Verfahren nach Anspruch 1, wobei die Parameter des mathematischen Modells zumindest teilweise aus einem Datenspeicher (11) geladen werden und/oder nach Anwendung des Optimierungsverfahrens zumindest teilweise in dem Datenspeicher (11) gespeichert werden.

3. Verfahren nach Anspruch 1 oder 2, wobei das computerimplementierte Verfahren (1) online oder offline ausgeführt werden kann.

4. Verfahren nach den Ansprüchen 1 -3, wobei die Parameteroptimierung (7) durch Minimierung der Kostenfunktion von Differenzen (6) mittels eines Gradientenverfahrens durchgeführt wird.

5. Verfahren nach den Ansprüchen 1 - 3, wobei die Parameteroptimierung (7) durch Minimierung der Kostenfunktion von Differenzen (6) mittels der Methode des steilsten Abstiegs durchgeführt wird.

6. Verfahren nach Anspruch 5, wobei durch Wahl einer Schrittweite bei Anwendung der Methode des steilsten Abstiegs die Änderung der Parameter (10) je Optimierungsschritt verstärkt oder abgeschwächt wird, wobei diese Schrittweite eine Lernrate definiert.

7. Verfahren nach den Ansprüchen 1 - 6, wobei das Herstellungsverfahren ein Flüssigstahlerzeugungsverfahren ist, besonders bevorzugt ein Verfahren zum Betrieb eines Elektrolichtbogenofens, bevorzugt ein Verfahren zum Betrieb eines Konverters zur Stahlherstellung.

8. Verfahren nach den Ansprüchen 1 - 7, wobei es sich beim mathematischen Modell (4) um ein Modell handelt, das die Temperatur in einer Schmelze und/oder die Kohlenstoffkonzentration in einer Schmelze und/oder die Phosphorkonzentration in einer Schmelze modelliert.

9. Verfahren nach Anspruch 8, wobei die Parameter (10) des mathematischen Modells (4) für die Berechnung der Kohlenstoffkonzentration in der Schmelze einen oder mehrere für den gesamten Bereich von möglichen Kohlenstoffkonzentrationen im Stahl gleiche oder für bestimmte Bereiche von Kohlenstoffkonzentrationen im Stahl unterschiedliche Korrekturfaktoren umfassen, die das Zuteilungsverhältnis eines in das Verfahren zur Stahlherstellung eingebrachten Sauerstoffs zu einem im Stahlbad vorhandenen Kohlenstoff für die Berechnung einer Oxidationsreaktion beschreiben.

10. Verfahren nach den Ansprüchen 1 - 9, wobei die Parameter (10) des mathematischen Modells (4) für die Berechnung der Temperatur in der Schmelze materialbezogene additive Korrekturwerte für spezifische Enthalpien eingesetzter Stoffe umfassen.

11. Verfahren nach den Ansprüchen 1 - 10, wobei die Parameter (10) des mathematischen Modells (4) für die Berechnung der Temperatur in der Schmelze für die gesamte Dauer des Herstellungsprozesses gleiche oder für bestimmte zeitliche Abschnitte des Herstellungsprozesses unterschiedliche Korrekturfaktoren für Wärmeverluste und/oder Energieeinbringung umfassen.

12. Verfahren nach den Ansprüchen 1 - 11, wobei die Prozessgrößen des mathematischen Modells (4) Wärmeverluste durch Wärmestrahlung von einer Schmelze zu einem Ofendeckel und/oder einem angestrahlten Bereich einer Ofenwand umfassen.

13. Vorrichtung/System zur Datenverarbeitung, umfassend Mittel zur automatischen Anpassung von Parametern (10) eines mathematischen Modells (4) zur Überwachung und/oder Steuerung/Regelung (9) eines Herstellungsprozesses zur Stahlerzeugung nach den Ansprüchen 1 - 12

14. Computerprogrammprodukt, umfassend Befehle, die bei der Ausführung des Programms durch einen Computer diesen veranlassen, das Verfahren/die Schritte des Verfahrens nach den Ansprüchen 1 - 12 auszuführen.

15. Computerlesbares Speichermedium, umfassend Befehle, die bei der Ausführung durch einen Computer diesen veranlassen, das Verfahren/die Schritte des Verfahrens nach den Ansprüchen 1 - 12 auszuführen.

Fig. 1

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | RICHARD D. M. MACROSTY ET AL: "Dynamic Modeling of an Industrial Electric Arc Furnace", INDUSTRIAL & ENGINEERING CHEMISTRY RESEARCH, Bd. 44, Nr. 21, 1. Oktober 2005 (2005-10-01), Seiten 8067-8083, XP055422410, ISSN: 0888-5885, DOI: 10.1021/ie050101b * Abstract, 2. Model Overview, 4. Parameter Estimation, 4.1. Sensitivity Analysis, 4.2. Available Measurements, 4.4. Rigorous Parameter Estimation * ----- | 1-15 | INV. G05B17/02 |
| Y | TAKANO YUI ET AL: "Iterative Feedback Tuning for Regulatory Control Systems Using Identified Sensitivity Functions via Predictive Error Method", 2022 61ST ANNUAL CONFERENCE OF THE SOCIETY OF INSTRUMENT AND CONTROL ENGINEERS (SICE), THE SOCIETY OF INSTRUMENT AND CONTROL ENGINEERS - SICE, 6. September 2022 (2022-09-06), Seiten 46-51, XP034203270, DOI: 10.23919/SICE56594.2022.9905824 [gefunden am 2022-10-06] * Abstract, 1 Introduction, 3.2 Steepest descent algorithm * ----- -/-- | 1-15 | |

| RECHERCHIERTE SACHGEBIETE (IPC) |
|---|
| G05B C21C |

Der vorliegende Recherchenbericht wurde für alle Patentansprüche erstellt

| Recherchenort | Abschlußdatum der Recherche | Prüfer |
|---|---|---|
| München | 31. Januar 2024 | Frey, Richard |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
   ..................................................................................
& : Mitglied der gleichen Patentfamilie, übereinstimmendes
   Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

**Nummer der Anmeldung**

**EP 23 19 1929**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | ZHANG ZHUOLUN ET AL: "Deep learning-based prediction framework of temperature control time for wide-thick slab hot rolling production", EXPERT SYSTEMS WITH APPLICATIONS, ELSEVIER, AMSTERDAM, NL, Bd. 227, 19. April 2023 (2023-04-19), XP087330208, ISSN: 0957-4174, DOI: 10.1016/J.ESWA.2023.120083 [gefunden am 2023-04-19] * 1. Introduction, 4.4.6 Training DNN based on AGA * | 1-15 | |
| A | HAY THOMAS ET AL: "A Review of Mathematical Process Models for the Electric Arc Furnace Process", STEEL RESEARCH INTERNATIONAL., Bd. 92, Nr. 3, 1. März 2021 (2021-03-01), Seite 2000395, XP093067722, DE ISSN: 1611-3683, DOI: 10.1002/srin.202000395 Gefunden im Internet: URL:https://onlinelibrary.wiley.com/doi/full-xml/10.1002/srin.202000395> * Abschnitte 3.2, 6.2, 8.1, 8.2 * | 1-15 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 31. Januar 2024 | Frey, Richard |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
Dokument

EPO FORM 1503 03.82 (P04C03)